# EUROPÄISCHE PATENTSCHRIFT

(11) **EP 2 876 378 B1**
(45) Veröffentlichungstag und Bekanntmachung des Hinweises auf die Patenterteilung: **30.10.2019**
(21) Anmeldenummer: 14003196.4
(22) Anmeldetag: 16.09.2014
(51) Int. Cl.: F24F 11/00, F24F 12/00, F28D 20/02, F28F 19/00, F28F 17/00

(54) **Anlage zur Wärmerückgewinnung**
System for the recovery of heat
Installation de récupération de la chaleur

(30) Priorität: 12.11.2013 DE 102013018938
(43) Veröffentlichungstag der Anmeldung: 27.05.2015
(73) Patentinhaber: FläktGroup Deutschland GmbH, 44625 Herne (DE)
(72) Erfinder: Fieberg, Christian, Dr., 45966 Gladbeck (DE)
(74) Vertreter: Cohausz Hannig Borkowski Wißgott

(56) Entgegenhaltungen:
- EP-A2- 2 239 522
- EP-A2- 2 444 755
- DE-A1-102005 055 378
- DE-A1-102007 041 041
- US-A1- 2013 118 188

## Beschreibung

Die Erfindung betrifft eine Anlage zur Wärmerückgewinnung bei der Klimatisierung eines Gebäudes mit mindestens einem Wärmetauscher, der von der Abluft und der Außenluft im Gegen- und/oder Kreuzstrom durchströmt ist, um mit der Abluft die Außenluft zu erwärmen, wobei die aus dem Gebäudeinneren stammende Abluft hinter dem Wärmetauscher zur Fortluft und die Außenluft hinter dem Wärmetauscher zur in das Gebäudeinnere strömenden Zuluft wird, und wobei ein von der Abluft und/oder einer Elektroheizung erwärmbarer Latentwärmespeicher angeordnet ist.

Bei der Klimatisierung von Gebäuden werden Anlagen zur Wärmerückgewinnung verwendet, um die in der Abluft enthaltene Wärmeenergie auf die Außenluft durch einen Wärmetauscher zu übertragen. Hierbei kann es geschehen, dass die aus dem Gebäude stammende Abluft soweit vom Wärmetauscher durch die Außenluft abgekühlt wird, dass im Bereich der Fortluft der Wärmetauscher vereist. Um dies zu verhindern, ist es bekannt, den Wärmetauscher zum Vereisungsschutz mit Bypassklappen zu versehen und während des Abtauvorgangs die Außenluft durch ein Nachheizregister auf die Temperatur der Zuluft zu bringen. Dies erfordert eine zusätzliche hohe Heizleistung und führt damit zu einem hohen Energieaufwand.

Aus der DE 10 2007 041 041 A1 ist eine Klimaanlage bekannt mit einem Wärmetauscher, dessen Vereisen dadurch verhindert wird, dass Wärmeenergie der Fortluft entnommen wird. Die Wärmeenergie wird hierbei der Fortluft über ein Kältemittel entnommen, wobei hierzu eine Wärmepumpe verwendet wird.

Aus der EP 2 239 522 A2 ist es an sich bekannt, im Weg der Zuluft einen Wärmespeicher anzuordnen, der Wärmeenergie oder Kälteenergie der Außenluft speichert und diese Energie zu einem späteren Zeitpunkt der Außenluft wieder zuzuführen, um eine optimale klimatechnische und energietechnische Betriebsführung zu ermöglichen und hierdurch Energiekosten zu sparen.

Aufgabe der Erfindung ist es, eine Anlage der eingangs genannten Art so zu verbessern, dass ein Vereisen des Wärmetauschers im Bereich der Fortluft auf technisch einfache Weise verhindert oder rückgängig gemacht wird, ohne einen größeren zusätzlichen Energieaufwand von außen.

Diese Aufgabe wird erfindungsgemäß dadurch gelöst, dass der Latentwärmespeicher in dem Luftstrom der Außenluft angeordnet ist und während einer begrenzten kurzen Zeitdauer seine gespeicherte Wärmeenergie an die Außenluft abgibt, um ein Vereisen des Wärmetauschers im Bereich der Fortluft zu verhindern und/oder zu beheben.

Um ein Vereisen des Wärmetauschers im Bereich der Fortluft zu verhindern, oder eine dortige Vereisung aufzutauen, ohne von außen Wärme hinzuführen zu müssen, wird zeitweise die Außenluft durch den Latentwärmespeicher erwärmt, der seine Wärmeenergie von der Abluft erhält. Bei geringem technischem Aufwand wird ein Vereisen verhindert oder rückgängig gemacht, ohne von außen zusätzliche Energie in größerem Maße hinzuführen zu müssen. Bei dieser Lösung ist auch sichergestellt, dass in der Ladephase der Latentwärmespeicher stets voll aufgeladen wird.

Vorzugsweise wird vorgeschlagen, dass der Latentwärmespeicher innerhalb des Wärmetauschers angeordnet ist, so dass eine einfache kompakte Anlage erhalten wird. Ferner wird vorgeschlagen, dass im Abluftstrom ein die Abluft fördernder Ventilator angeordnet ist.

Vorzugsweise weist das das Phasenübergangsmaterial des Latentwärmespeichers ein Salzhydrat auf. Alternativ weist das Phasenübergangsmaterial des Latentwärmespeichers ein Paraffin auf.

Drei Ausführungsbeispiele der Erfindung sind in den Zeichnungen dargestellt und werden im Folgenden näher beschrieben. Es zeigen
- Figur 1: ein erstes Ausführungsbeispiel mit einem Latentwärmespeicher an der Außenluftzuführung,
- Figuren 2 und 3: ein zweites Ausführungsbeispiel mit einem aufgeteilten Wärmetauscher.

Bei der Klimatisierung eines Gebäudes werden häufig Anlagen zur Wärmerückgewinnung eingesetzt, die einen Wärmetauscher 1 aufweisen, in denen die Außenluft AUL von der Abluft ABL erwärmt wird, die aus dem Inneren eines Gebäudes abgeführt wird. Hierbei wird die Außenluft zur erwärmten Zuluft ZUL und die abgekühlte Abluft ABL zur nach außen austretenden gekühlten Fortluft FOL. Hierbei durchströmen Außenluft und Abluft den Wärmetauscher 1 im Gegen- oder Kreuzstrom.

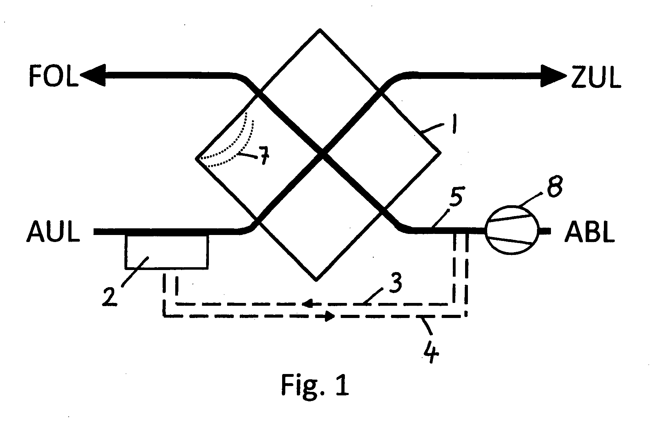

Aufgrund des hohen Wirkungsgrades des Wärmetauschers 1 kann es geschehen, dass die Fortluft derart tief heruntergekühlt ist, dass der Wärmetauscher im Bereich des Fortluftkanals vereist. Um ein solches Vereisen 7 zu verhindern oder eine entstandene Vereisung aufzutauen ist in der Ausführung nach Fig. 1 ein Latentwärmespeicher 2 im oder am Luftkanal der Außenluft angeordnet. Der Latentwärmespeicher besitzt ein Phasenübergangsmaterial (PCM) insbesondere ein Salzhydrat oder Paraffin und ist über zwei Leitungen 3, 4 an den Abluftkanal 5 angeschlossen. Dies ermöglicht es, dass in den Zeiträumen, in denen ein Vereisen 7 nicht verhindert bzw. eine Vereisung nicht aufgetaut werden muss, der Latentwärmespeicher durch die Temperatur der Abluft aufgewärmt wird. Die Leitungen 3, 4 bilden somit einen Wärmekreislauf zum Aufladen des Latentwärmespeichers 2 durch die Wärme der Abluft im Abluftkanal 5. Dabei wird die Wärmeenergie aus der Abluft über die Leitungen 3 und 4 entweder dadurch übertragen, dass die Leitungen 3 und 4 Luftleitungen sind, oder aber in dem von den Leitungen 3 und 4 gebildeten Kreislauf strömt eine wärmeübertragende Flüssigkeit.

Um ein Vereisen 7 des Wärmetauschers 1 im Bereich der Fortluft zu verhindern, wird in regelmäßigen Abständen die Außenluft durch den Latentwärmespeicher 2 kurzzeitig erwärmt. Ist bereits eine Vereisung aufgetreten, so wird die Außenluft solange durch den Latentwärmespeicher 2 erwärmt, bis die Fortluft soweit erwärmt wurde, dass die Vereisung auftaut. Hierbei kann im Abluftkanal ein die Abluft fördernder Ventilator 8 angeordnet sein.

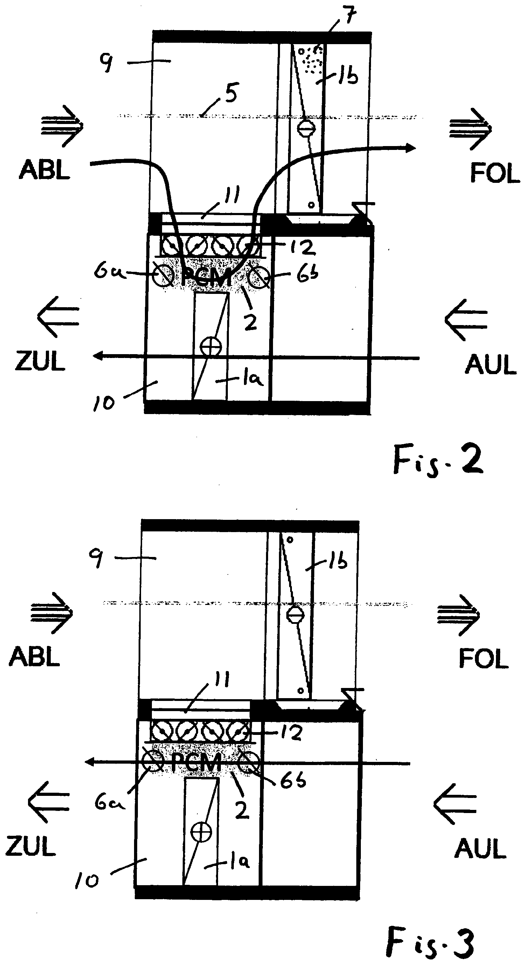

Die Ausführung nach Fig. 2 und 3 unterscheidet sich von der nach Fig. 1 dadurch, dass der Wärmetauscher in mindestens zwei Tauscherbereiche (Erhitzer 1a und Kühler 1b) aufgeteilt ist, die jeweils in einem Luftkanal 9, 10 angeordnet sind. Hierbei sind die Luftkanäle 9, 10 durch eine Verbindungsstelle 11 miteinander verbunden, die durch Klappen 12 schließbar ist. In der Verbindungsstelle 11 liegt der Latentwärmespeicher 2. Bei geöffneter Verbindungsstelle 11 (Fig. 2) erhält der Latentwärmespeicher 2 Wärmeenergie aus der Abluft ABL und bei geschlossener Verbindungsstelle 11 (Fig. 3) gibt der Latentwärmespeicher 2 seine Wärmeenergie an die Außenluft AUL ab, in dem vor und/oder hinter dem Latentwärmespeicher 2 angeordnete Klappen 6a, 6b geöffnet sind.

Bei einer weiteren Ausführung ist der Latentwärmespeicher sowohl an den Luftkanal der Abluft als auch an den Luftkanal der Außenluft angeschlossen, wobei immer nur einer der beiden Luftkanäle geöffnet ist, wobei in der Aufladephase der Latentwärmespeicher von der Abluft und in der Enteisungsphase von der Außenluft durchströmt ist.

## Patentansprüche

1. Anlage zur Wärmerückgewinnung bei der Klimatisierung eines Gebäudes mit mindestens einem Wärmetauscher (1), der von der Abluft und der Außenluft im Gegen- und/oder Kreuzstrom durchströmt ist, um mit der Abluft die Außenluft zu erwärmen, wobei die aus dem Gebäudeinneren stammende Abluft hinter dem Wärmetauscher (1) zur Fortluft und die Außenluft hinter dem Wärmetauscher zur in das Gebäudeinnere strömenden Zuluft wird, und wobei ein von der Abluft erwärmbarer Latentwärmespeicher (2) angeordnet ist, **dadurch gekennzeichnet, dass** der Latentwärmespeicher (2) sowohl an den Luftstrom der Abluft als auch an den Luftstrom der Außenluft angeschlossen und durchströmt ist und in der Aufladephase von der Abluft und in einer Enteisungsphase von der Außenluft durchströmt ist, um ein Vereisen (7) des Wärmetauschers (1) im Bereich der Fortluft zu verhindern und/oder zu beheben.

2. Anlage nach Anspruch 1, **dadurch gekennzeichnet, dass** der Wärmetauscher (1) während einer begrenzten kurzen Zeitdauer von einem Bypass (6) überbrückt ist, der zumindest einen Teil der Außenluft um den Wärmetauscher (1) herum zum Luftstrom der Zuluft führt, um ein Vereisen (7) des Wärmetauschers im Bereich der Fortluft zu verhindern und/oder zu beheben.

3. Anlage nach Anspruch 1 oder 2, **dadurch gekennzeichnet, dass** der Latentwärmespeicher (2) innerhalb des Wärmetauschers (1) angeordnet ist.

4. Anlage nach einem der vorherigen Ansprüche, **dadurch gekennzeichnet, dass** im Abluftstrom (ABL) ein die Abluft fördernder Ventilator (8) angeordnet ist.

5. Anlage nach einem der vorherigen Ansprüche, **dadurch gekennzeichnet, dass** das Phasenübergangsmaterial des Latentwärmespeichers (2) ein Salzhydrat aufweist.

6. Anlage nach einem der Ansprüche 1 bis 4, **dadurch gekennzeichnet, dass** das Phasenübergangsmaterial des Latentwärmespeichers (2) ein Paraffin aufweist.

## Claims

1. System for the recovery of heat in the air-conditioning of a building, comprising at least one heat exchanger (1), which is flowed through by the outgoing air and the outside air in counter-current and/or cross-current, in order to heat the outside air with the outgoing air, wherein the outgoing air, originating from the interior of the building, downstream of the heat exchanger (1) becomes the exhaust air and the outside air downstream of the heat exchanger becomes the incoming air flowing into the interior of the building, and wherein a latent heat storage unit (2) that can be heated by the outgoing air is arranged, **characterized in that** the latent heat storage unit (2) is connected both to the air stream of the outgoing air and to the air stream of the outside air and is flowed through and, in the charging phase, is flowed through by the outgoing air and, in a deicing phase, is flowed through by the outside air, in order to prevent and/or eliminate icing (7) of the heat exchanger (1) in the region of the exhaust air.

2. System according to Claim 1, **characterized in that** the heat exchanger (1) is bridged during a limited short time period by a bypass (6), which conducts at least part of the outside air around the heat exchanger (1) to the air stream of the incoming air, in order to prevent and/or eliminate icing (7) of the heat exchanger in the region of the exhaust air.

3. System according to Claim 1 or 2, **characterized in that** the latent heat storage unit (2) is arranged within the heat exchanger (1).

4. System according to one of the preceding claims, **characterized in that** a fan (8) conveying the outgoing air is arranged in the outgoing air stream (ABL).

5. System according to one of the preceding claims, **characterized in that** the phase transition material of the latent heat storage unit (2) comprises a salt hydrate.

6. System according to one of Claims 1 to 4, **characterized in that** the phase transition material of the latent heat storage unit (2) comprises a paraffin.

## Revendications

1. Installation de récupération de chaleur dans le système de climatisation d'un bâtiment, ladite installation comportant au moins un échangeur de chaleur (1) qui est traversée par l'air évacué et l'air extérieur à contre-courant et/ou à courants croisés afin de chauffer l'air extérieur avec l'air évacué, l'air évacué qui provient de l'intérieur du bâtiment se transformant derrière l'échangeur de chaleur (1) en l'air sortant et l'air extérieur se transformant derrière l'échangeur de chaleur et l'air entrant qui s'écoule jusque dans l'intérieur du bâtiment, et un accumulateur de chaleur latente (2) étant prévu qui peut être chauffé par l'air évacué,
**caractérisée en ce que** l'accumulateur de chaleur latente (2) est relié au flux d'air évacué et au flux d'air extérieur et traverse et est traversé par ceux-ci et est traversé dans la phase régénération par l'air évacué et dans une phase de dégivrage par l'air extérieur pour empêcher et/ou pallier un givrage (7) de l'échangeur de chaleur (1) dans la région de l'air sortant.

2. Installation selon la revendication 1,
**caractérisée en ce que** l'échangeur de chaleur (1) est ponté, pendant une courte période limitée, par une dérivation (6) qui conduit au moins une partie de l'air extérieur autour de l'échangeur de chaleur (1) vers le flux d'air entrant pour empêcher et/ou pallier un givrage (7) de l'échangeur de chaleur (1) dans la région de l'air sortant.

3. Installation selon la revendication 1 ou 2,
**caractérisée en ce que** l'accumulateur de chaleur latente (2) est disposé dans l'échangeur de chaleur (1) .

4. Installation selon l'une des revendications précédentes, **caractérisée en ce qu'**un ventilateur transportant l'air évacué (8) est disposé dans le flux d'air évacué (ABL).

5. Installation selon l'une des revendications précédentes, **caractérisée en ce que** la matière à transition de phase de l'accumulateur de chaleur latente (2) comporte un sel hydraté.

6. Installation selon l'une des revendications 1 à 4,
**caractérisée en ce que** la matière à transition de phase de l'accumulateur de chaleur latente (2) comprend une paraffine.
